# DEMANDE DE BREVET EUROPEEN

(11) **EP 4 411 936 A1**
(43) Date de publication de la demande: **07.08.2024**
(21) Numéro de dépôt: 23315022.6
(22) Date de dépôt: 03.02.2023
(51) Int. Cl.: H01M 10/54

(54) **FIL A COUPER UN ENDUIT DE REMPLISSAGE**

(71) Demandeur: Automotive Cells Company SE, 92300 Levallois Perret (FR)
(72) Inventeur: Mathieu, Alexandre, 33300 Bordeaux (FR); Queyrens, Mathieu, 33910 Saint-Denis-De-Pile (FR); Origuchi, Masato, 78120 Rambouillet (FR); Boos, Gwenaelle, 33320 Eysines (FR)
(74) Mandataire: Alatis

(57) **Abrégé**

L'invention concerne un procédé et un dispositif de désolidarisation d'un module (1) d'un support (2) sur lequel il est collé à l'aide d'un matériau de remplissage (3) comprenant un premier et un deuxième élément fixe (5, 6) reliés mécaniquement audit support (2), et un fil (7) présentant une première extrémité (8) reliée mécaniquement audit premier élément fixe (5), relié audit deuxième élément fixe (6) de manière à pouvoir coulisser au travers dudit deuxième élément fixe (6) et dont la partie située entre ledit premier et ledit deuxième élément fixe (5, 6) est disposée autour d'au moins une partie dudit module (1) au niveau de la couche dudit matériau de remplissage (3).

## Description

### DOMAINE TECHNIQUE DE L'INVENTION

L'invention concerne, de façon générale, le démontage de modules, en particulier de module électrique, fixés, par collage, sur le fond d'un boîtier, connu sous le terme anglais de « pack », servant de support à un ou plusieurs modules. Ces modules doivent pouvoir être démontés individuellement pour assurer leur maintenance, leur réparation ou leur remplacement.

L'invention se rapporte plus spécifiquement au démontage de modules collés sur le fond du boîtier à l'aide d'un enduit de remplissage qui peut être une colle ou une pâte thermique servant de colle.

L'invention s'applique en particulier à la désolidarisation de modules de batteries collés sur le fond du boîtier d'un bloc de batteries pour véhicule à motorisation électrique ou hybride.

### ÉTAT DE LA TECHNIQUE ANTÉRIEURE

Dans la suite de la description, on entend par direction ou axe longitudinal et transversal des axes respectivement parallèle ou perpendiculaire à la longueur des modules à désolidariser du support sur lequel il est collé. Il en va de même pour l'avant et l'arrière ou le haut et le bas qui sont respectivement orientés selon la position normale du module dans le boîtier avec l'avant orienté du côté de l'opérateur en position pour démonter le module.

Dans la suite, il sera fait référence pour faciliter la compréhension de l'invention à des modules de batteries collés sur un support formé par le fond du boîtier du bloc de batteries d'un véhicule électrique.

Selon l'état actuel de la technique, les modules de batteries sont collés au fond du boîtier du bloc de batterie servant de support aux modules contenus dans le bloc de batteries par des vis. Une pâte thermique est appliquée entre le module et le fond du boitier. Cette pâte thermique fait office de matériau de remplissage. En supplément des vis, elle contribue à la fixation des modules par effet ventouse. Pour désolidariser le module de batteries du fond du boîtier de batteries, un opérateur doit exercer une traction sur le module de batteries à décoller afin de déchirer la couche de pâte thermique retenant ledit module sur le fond du boîtier après que les vis aient été retirées. Les modules de batteries sont solidement collés sur le fond du boîtier afin qu'ils ne se détachent pas sous l'effet des accélérations, des changements de direction ou les chocs auxquels ils sont soumis dans le véhicule électrique. La force de traction à exercer sur le module à décoller doit être conséquente pour pouvoir déchirer la couche de matériau de remplissage qui le solidarise du fond du boîtier du bloc de batteries. Cette force de traction peut aller jusqu'à 125 kg. En conséquence, des points de manutention sont prévus pour être saisis fermement afin que la force de traction nécessaire à leur arrachage puisse être exercée sur les modules. Néanmoins, lorsque cette force de traction est appliquée sur le module à décoller, celui-ci peut être endommagé ainsi que les modules qui l'entourent.

La méthode de désolidarisation d'un module de son support formé par le fond du boîtier de bloc de batteries sur lequel il est collé peut conduire à endommager le module à décoller et le reste du bloc de batteries. En effet, il est difficile de décoller ces modules par arrachement, car ceux-ci sont solidement fixés sur le fond du boîtier de bloc de batteries. En outre, elle nécessite de munir les modules de batteries de points de manutention sur lesquels l'opérateur peut exercer à la main ou par un outil la force de traction nécessaire à l'arrachement des modules.

Il existe donc un besoin de pouvoir décoller sans difficulté des modules de batteries du fond du boîtier d'un bloc de batteries et sans risquer d'endommager le module à décoller et le bloc de batteries.

### EXPOSÉ DE L'INVENTION

L'invention vise à remédier à tout ou partie des inconvénients de l'état de la technique en proposant notamment un dispositif et un procédé permettant de désolidariser facilement un module collé sur son support sans risquer d'endommager le module à décoller, les autres composants situés dans son environnement et/ou le boîtier dans lequel il est collé.

À cet effet, il est proposé, selon un premier aspect de l'invention, un dispositif de désolidarisation d'un module d'un support sur lequel il est collé à l'aide d'un matériau de remplissage comprenant un premier et un deuxième élément fixe reliés mécaniquement audit support, et un fil présentant une première extrémité reliée mécaniquement audit premier élément fixe, relié audit deuxième élément fixe de manière à pouvoir coulisser au travers dudit deuxième élément fixe et dont la partie située entre ledit premier et ledit deuxième élément fixe est disposée autour d'au moins une partie dudit module au niveau de la couche dudit matériau de remplissage.

Grâce à une telle combinaison de caractéristiques, la force appliquée par le dispositif de l'invention sur le module et le support sur lequel il est collé est significativement réduite et ainsi il n'y a plus de risque d'endommager le module à décoller ou les éléments situés dans son environnement.

Préférentiellement, ledit premier élément fixe et le deuxième élément fixe sont agencés de part et d'autre d'un côté avant dudit module.

Avantageusement, ledit premier élément fixe est un premier tourillon, et/ou ledit deuxième élément fixe est un deuxième tourillon.

Préférentiellement, ledit premier tourillon et/ou ledit deuxième tourillon présentent un perçage axial borgne ou traversant, une rainure transversale s'étendant perpendiculairement à l'axe du premier et/ou du deuxième tourillon au travers d'au moins une partie dudit perçage axial, et une rainure longitudinale s'étendant d'un côté du perçage axial depuis une extrémité libre du premier et/ou du deuxième tourillon au travers de la rainure transversale de manière que l'extrémité supérieure dudit premier et/ou du deuxième tourillon forme un crochet.

Avantageusement, ledit fil présente à sa première extrémité un embout apte à se loger dans le perçage axial dudit premier tourillon, et/ou ledit fil est maintenu de manière coulissante dans ledit crochet formé à l'extrémité supérieure dudit deuxième tourillon.

Préférentiellement, ledit fil est associé à un élément de chauffage et/ou un élément de préhension est relié à l'extrémité dudit fil située du côté du deuxième élément fixe.

Selon un deuxième aspect de l'invention, il est proposé un ensemble comprenant un module collé sur un support à l'aide d'un matériau de remplissage et un dispositif de désolidarisation dudit module dudit support tel que défini ci-dessus.

Selon un troisième aspect de l'invention, il est proposé un bloc de batteries pour véhicule électrique ou hybride comprenant un boîtier dans lequel au moins un module de batteries est collé sur un fond dudit boîtier servant de support audit au moins un module de batteries, comprenant en outre un dispositif de désolidarisation d'un module d'un support tel que décrit ci-dessus, ou, alternativement, dans lequel un dispositif de désolidarisation d'un module d'un support tel que décrit ci-dessus est installé au moment de désolidariser ledit au moins un module de batteries.

Selon un quatrième aspect de l'invention, il est proposé un procédé de désolidarisation d'un module collé à l'aide d'un matériau de remplissage sur un support dans lequel un fil est tendu à l'arrière dudit module, et ledit fil est tiré vers l'avant dudit module afin de couper ledit matériau de remplissage reliant ledit module audit support.

Préférentiellement, ledit fil est relié par une première extrémité à un premier élément fixe relié mécaniquement audit support et agencé d'un côté d'une extrémité avant de la base dudit module, ledit fil est relié de façon coulissante à un deuxième élément fixe de manière à pouvoir coulisser au travers dudit deuxième élément fixe qui est relié mécaniquement audit support et agencé de l'autre côté de ladite extrémité avant de la base dudit module, la partie dudit fil située entre ledit premier et ledit deuxième élément fixe est disposée autour d'au moins une partie de la base dudit module au niveau de la couche dudit matériau de remplissage, et une traction est exercée à la deuxième extrémité dudit fil de manière à faire coulisser le fil au travers dudit deuxième élément fixe et à faire glisser ledit fil entre la base dudit module et ledit support, ainsi ledit matériau de remplissage est coupé et ledit module est désolidarisé dudit support.

Avantageusement, ladite traction est exercée sur ledit fil dans une direction substantiellement perpendiculaire audit support afin de faire coulisser ledit fil substantielllement parrallèlement audit support entre ledit premier et ledit deuxième élément fixe.

Avantageusement, ladite traction est exercée sur ledit fil par des mouvements oscillant d'avant en arrière.

Préférentiellement, ledit fil, ledit premier élément fixe et ledit deuxième élément fixe sont assemblés sur ledit support au moment de désolidariser ledit module dudit support.

Avantageusement, ledit module est un module de cellules de batteries, et ledit support est un fond d'un boîtier d'un bloc de batteries pour véhicule électrique ou hybride.

D'autres caractéristiques et avantages de l'invention sont mis en évidence par la description ci-après d'exemples non limitatifs de réalisation des différents aspects de l'invention.

### BRÈVE DESCRIPTION DES FIGURES

La description se réfère aux figures annexées qui sont aussi données à titre d'exemples de réalisation non limitatifs de l'invention :
- la figure 1a montre une vue partielle en perspective du module sur son support avec le dispositif de l'invention ;
- la figure 1b montre une vue de dessus du support avec le dispositif de l'invention et sans le module ;
- la figure 2a illustre la séquence de mise en oeuvre du dispositif de l'invention ;
- la figure 2b illustre la séquence de désolidarisation du module du support ;
- la figure 3a montre une vue en perspective du tourillon ;
- la figure 3b montre une vue en perspective du premier tourillon et de l'embout du fil ;
- la figure 3c montre une vue en perspective du fil passant au travers du deuxième tourillon ;
- la figure 4a montre une vue en perspective du module sur le support avec une lyre de découpe ;
- la figure 4b montre une vue en perspective du module sur le support avec une lyre de découpe en position à l'arrière du module ;
- la figure 4c montre une vue en perspective du module sur le support avec une lyre de découpe découpant le matériau de remplissage.

Pour plus de clarté, les éléments identiques ou similaires sont repérés par des signes de référence identiques sur l'ensemble des figures.

### DESCRIPTION DÉTAILLÉE D'UN MODE DE RÉALISATION

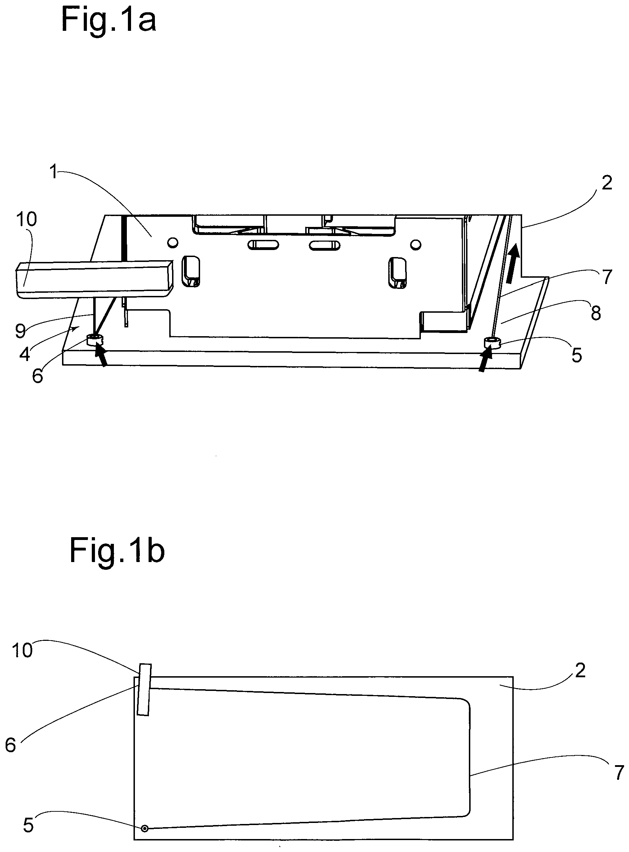

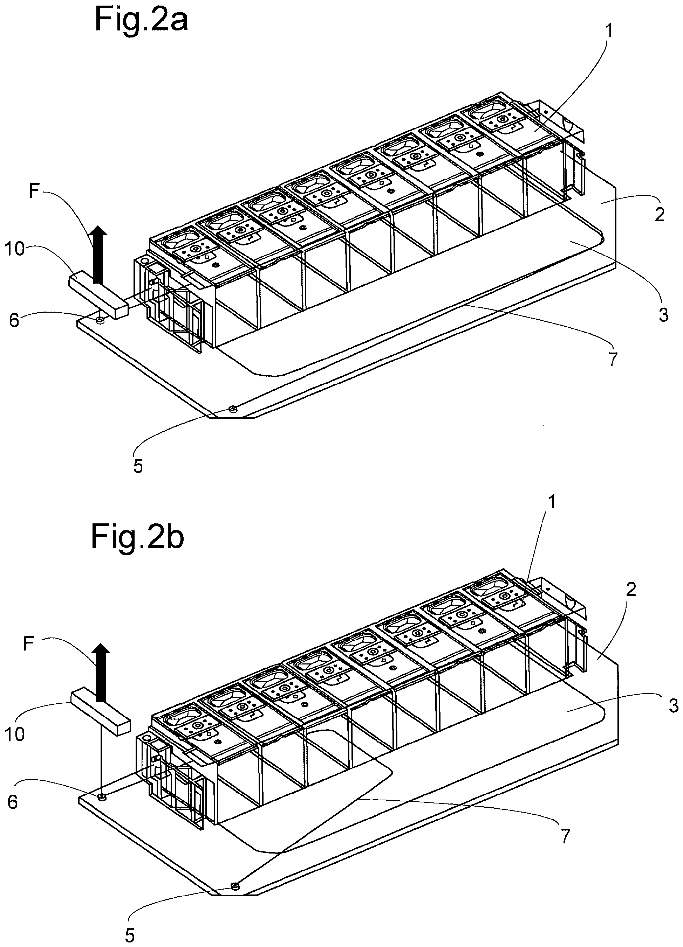

Un bloc de batteries alimentant une machine électromotrice d'un véhicule électrique ou hybride (non illustré) comprend un boîtier généralement métallique contenant une pluralité de modules de batteries collés sur le fond du boîtier faisant typiquement office de support des modules de batteries. La figure 1a montre un module **1** fixé sur un support **2** par un matériau de remplissage **3** enduit sur le support **2** à l'emplacement du module **1** comme illustré sur la figure 2a.

Comme illustré à la figure 1, un dispositif de désolidarisation **4** du module **1** du support **2** sur lequel il est collé à l'aide du matériau de remplissage **3** comprend un premier élément fixe, ici un premier tourillon **5**, relié mécaniquement au support **2** à droite d'un côté avant du module **1** et un deuxième élément fixe, ici un deuxième tourillon **6**, relié mécaniquement au support **2** à gauche du côté avant du module **1**. Le premier tourillon **5** et le deuxième tourillon **6** sont fixés sur la même face du support **2** que le module **1** de façon permanente (par exemple par soudage, collage ou « rivetage ») ou de façon démontable (par exemple par vissage ou par assemblage baïonnette).

Un fil **7** est attaché au premier tourillon **5** par une première extrémité **8**. Le fil **7** passe autour du module **1** par l'arrière le long du support **2** au niveau du matériau de remplissage **3** pour passer au travers du deuxième tourillon **6**. Une deuxième extrémité **9** du fil **7** est reliée à un élément de préhension, par exemple une poignée **10**, pour qu'une force de traction puisse être exercée sur le fil **7** afin de le faire coulisser au travers du deuxième tourillon **6**.

Alternativement, le fil **7** peut ne pas être attaché au premier tourillon **5**. Dans cette variante de mise en oeuvre de l'invention (non représentée), le fil **7** passe au travers du premier tourillon **5**, par exemple comme pour le deuxième tourillon **6**. Ainsi, la première extrémité **8** du fil **7** peut être reliée à un deuxième élément de préhension, par exemple une deuxième poignée (non représentée) similaire à la poignée **10**. Ainsi, le décollement du module **1** par rapport au support **2** peut être réalisé par une traction alternée du premier et du deuxième élément de préhension (**10**).

Selon un premier exemple de mise en oeuvre du dispositif de désolidarisation **4** du module **1** du support **2**, le premier tourillon **5**, le deuxième tourillon **6** et le fil **7** sont préinstallés sur le support **2** autour du module **1** dans le boîtier du bloc de batteries au moment de l'assemblage du bloc de batteries en prévision d'un futur décollage d'au moins un module de batteries **1** du support **2**.

Selon un deuxième exemple de mise en oeuvre du dispositif de désolidarisation **4** du module **1** du support **2**, le premier tourillon **5**, le deuxième tourillon **6** et le fil **7** sont installés sur le support **2** autour du module **1** à décoller dans le boîtier du bloc de batteries lorsque le module 1 doit être décollé du support **2**.

Le fil **7** est constitué d'un fil métallique, par exemple en acier, ou d'un fil en matière synthétique, par exemple en nylon. Alternativement, le fil **7** peut être constitué d'un câble multifilaire torsadé en acier ou en matière synthétique.

Les figures 2a et 2b illustrent le procédé de désolidarisation du module **1** collé au support **2** par le matériau de remplissage **3**. Selon ce procédé, une tension F est exercée sur la deuxième extrémité **9** du fil **7** qui est relié mécaniquement au premier tourillon **5** à droite du côté avant du module 2 par sa première extrémité **8** comme décrit plus tard.

Comme illustré à la figure 2a, en tirant sur la poignée **10**, le fil **7** coulisse au travers du deuxième tourillon **6** qui est relié mécaniquement audit support **2** et agencé à gauche du côté avant du module **2**. La partie du fil **7** située entre le premier tourillon **5** et le deuxième tourillon **6** est disposée autour du module **2** par l'arrière au niveau de la couche du matériau de remplissage **3**. Ainsi, sous l'effet de la force de traction **F** sur la deuxième extrémité **9** du fil **7**, celui-ci se glisse entre le module **2** et le support **1**, comme illustré par la figure 2b, et coupe le matériau de remplissage **3** pour libérer le module **2**.

Afin de faciliter le découpage du matériau de remplissage **3** la force de traction est exercée de façon saccadée sur le fil **7** par des mouvements oscillant d'avant en arrière sur la poignée **10**.

Pendant que la force de traction **F** est exercée sur la poignée **10**, un élément de chauffage (non illustré), relié par exemple à la première extrémité **8** échauffe le fil **7** pour faciliter le découpage du matériau de remplissage **3**. Dans cet exemple de mise en oeuvre de l'invention, le fil peut être conducteur. Ainsi, il présente une résistance et, en faisant passer un courant dans le fil **7**, il va s'échauffer par effet Joule.

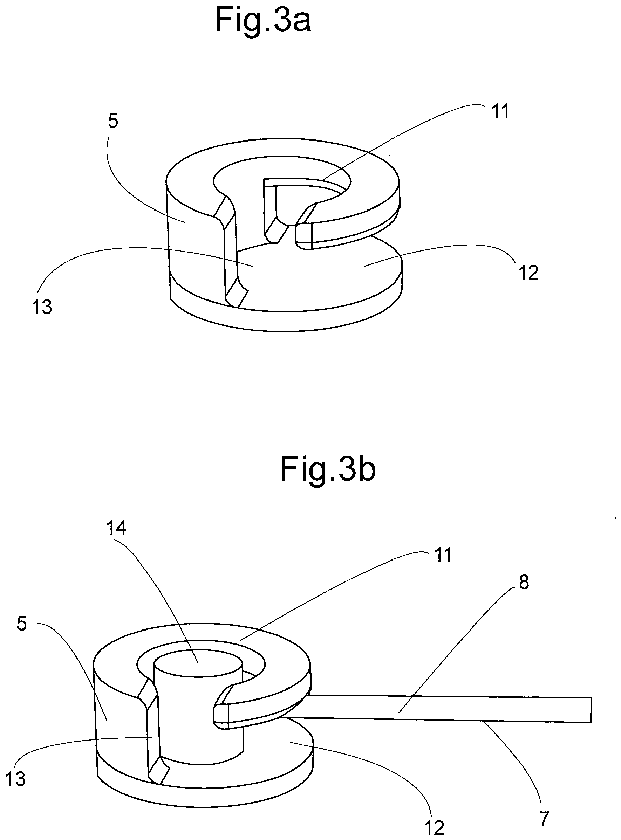

Comme montré à la figure 3a, le premier tourillon **5** présente un perçage axial borgne **11** sur son extrémité supérieure. Alternativement, le perçage axial peut être traversant. Une rainure transversale **12** s'étendant perpendiculairement à l'axe du tourillon **5** au travers du perçage axial **11**. Une rainure longitudinale **13** s'étendant d'un côté du perçage axial **11** depuis l'extrémité supérieure du tourillon **5** au travers de la rainure transversale **12**. Ainsi, l'extrémité supérieure dudit tourillon **5** forme un crochet.

Le fil **7** présente à sa première extrémité **8** un embout **14** serti sur celle-ci. L'embout est apte à se loger dans le perçage axial **11** du premier tourillon **5**. Le fil **7** passe par la rainure longitudinale **13** pour rejoindre la rainure transversale **12** et l'embout **14** coopère avec le perçage axial **11** pour relier mécaniquement le fil **7** au premier tourillon **5**.

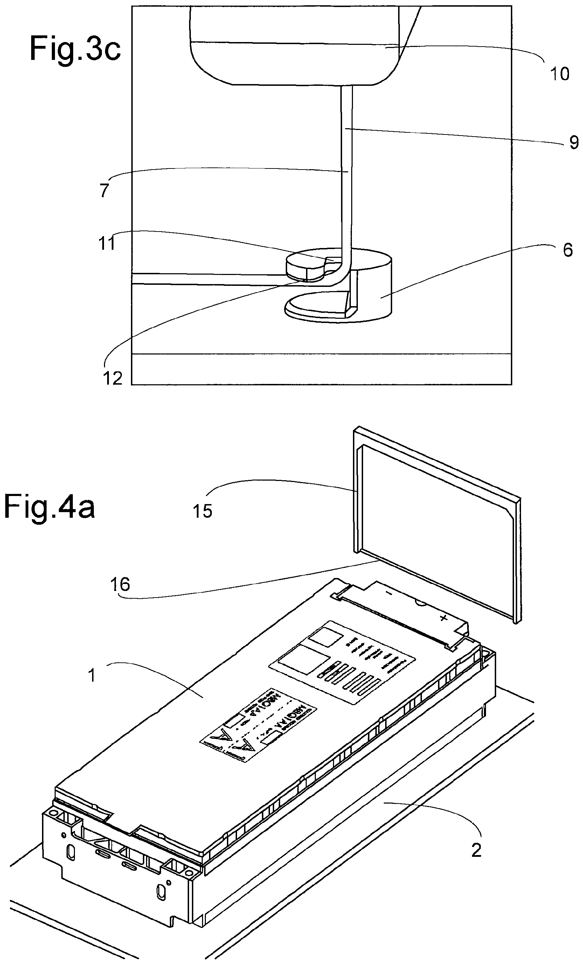

La figure 3c montre que le deuxième tourillon **6** est similaire au premier tourillon **5** illustré à la figure 3a, en particulier le deuxième tourillon **6** présente une extrémité supérieure en forme en crochet. Le fil **7** passe par la rainure transversale **12** pour sortir par le perçage axial **11** de l'extrémité supérieure du tourillon **6**. Ainsi, le fil **7** est maintenu de manière coulissante dans le crochet formé à l'extrémité supérieure du deuxième tourillon **6**.

Comme décrit ci-dessus, le fil **7**, le premier tourillon **5** et le deuxième tourillon **6** peuvent être préassemblés sur le support **2** autour du module **1** en prévision d'une future désolidarisation du module **1** du support **2** ou peuvent être installés sur le support **2** autour du module **1** lorsque celui-ci doit être décollé.

Lorsque le dispositif de désolidarisation du module **1** du support **2** est préassemblé sur le support **2**, le bloc de batteries présente un dispositif de désolidarisation par module **1**.

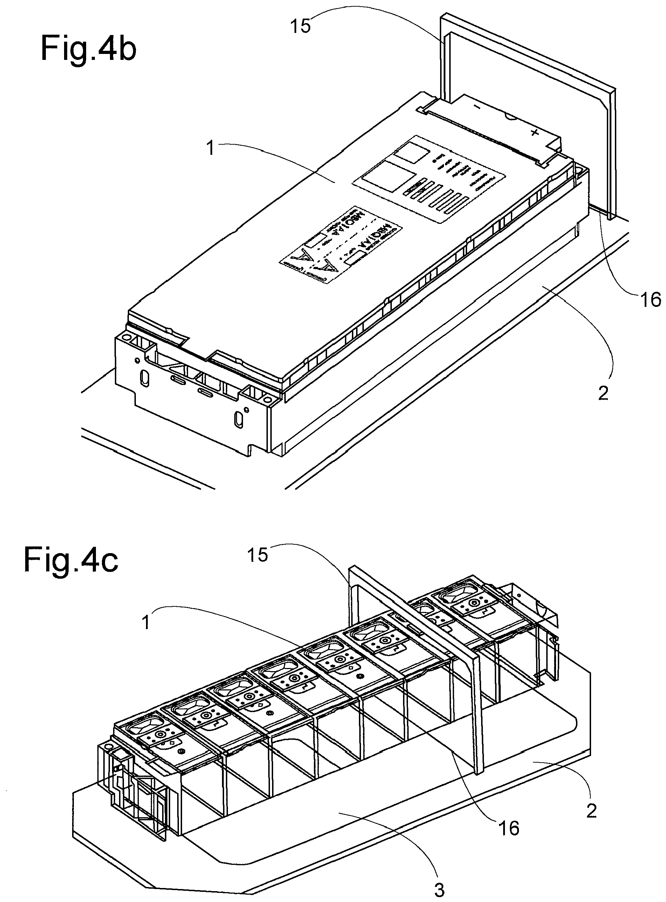

Lorsque le dispositif de désolidarisation du module **1** du support **2** n'est pas préinstallé dans le boîtier du bloc de batteries, il peut alternativement prendre la forme d'une lyre de coupe **15** comme illustré à la figure 4a. Ainsi quand le module **1** doit être décollé du support **2**, la lyre de coupe **15** est positionnée à l'arrière du module **1** avec un fil de lyre **16** au niveau du matériau de remplissage **3** parallèlement au support **2** comme le montre la figure 4b. Ensuite, la lyre de coupe **15** est tirée vers l'avant du module **1** avec le fil de lyre **16** qui glisse entre le module **1** et le support **2** pour découper la couche de matériau de remplissage **3** et libérer le module **1**.

Comme indiqué dans la description qui précède, les différents aspects de l'invention peuvent-être mis en oeuvre selon le contexte dans des variantes de configuration différentes de celles décrites ci-dessus. Par exemple, une lyre de coupe **15** peut être préinstallée derrière ou devant chacun des modules de batteries **1** dans le boîtier du bloc de batteries. De même, la lyre de coupe **15** peut être équipée d'un élément de chauffage.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif de désolidarisation d'un module (1) d'un support (2) sur lequel il est collé à l'aide d'un matériau de remplissage (3), **caractérisé en ce qu'**il comprend :
- un premier et un deuxième élément fixe (5, 6) reliés mécaniquement audit support (2) ; et
- un fil (7) présentant une première extrémité (8) reliée mécaniquement audit premier élément fixe (5), relié audit deuxième élément fixe (6) de manière à pouvoir coulisser au travers dudit deuxième élément fixe (6) et dont la partie située entre ledit premier et ledit deuxième élément fixe (5, 6) est disposée autour d'au moins une partie dudit module (1) au niveau de la couche dudit matériau de remplissage (3).

2. Dispositif de désolidarisation d'un module (1) d'un support (2) selon la revendication 1, dans lequel ledit premier élément fixe (5) et le deuxième élément fixe (6) sont agencés de part et d'autre d'un côté avant dudit module (1).

3. Dispositif de désolidarisation d'un module (1) d'un support (2) selon l'une des revendications 1 ou 2, dans lequel ledit premier élément fixe (5) est un premier tourillon, et/ou ledit deuxième élément fixe (6) est un deuxième tourillon.

4. Dispositif de désolidarisation d'un module (1) d'un support (2) selon la revendication 3, dans lequel ledit premier tourillon (5) et/ou ledit deuxième tourillon (6) présentent :
- un perçage axial (11) borgne ou traversant,
- une rainure transversale (12) s'étendant perpendiculairement à l'axe du premier et/ou du deuxième tourillon (5, 6) au travers d'au moins une partie dudit perçage axial (11), et
- une rainure longitudinale (13) s'étendant d'un côté du perçage axial (11) depuis une extrémité libre du premier et/ou du deuxième tourillon (5, 6) au travers de la rainure transversale (12) de manière que l'extrémité supérieure dudit premier et/ou dudit deuxième tourillon (5, 6) forme un crochet.

5. Dispositif de désolidarisation d'un module (1) d'un support (2) selon la revendication 4, dans lequel ledit fil (7) présente à sa première extrémité (8) un embout (14) apte à se loger dans le perçage axial (11) dudit premier tourillon (5), et/ou ledit fil (7) est maintenu de manière coulissante dans ledit crochet formé à l'extrémité supérieure dudit deuxième tourillon (6).

6. Dispositif de désolidarisation d'un module (1) d'un support (2) selon l'une des revendications précédentes, dans lequel ledit fil (7) est associé à un élément de chauffage et/ou un élément de préhension (10) est relié à l'extrémité dudit fil (7) située du côté du deuxième élément fixe (6).

7. Ensemble comprenant un module (1) collé sur un support (2) à l'aide d'un matériau de remplissage (3) et un dispositif de désolidarisation (4) dudit module (1) dudit support (2) tel que défini dans l'une quelconque des revendications précédentes.

8. Bloc de batteries pour véhicule électrique ou hybride comprenant un boîtier dans lequel au moins un module de batteries (1) est collé sur un fond (2) dudit boîtier servant de support audit au moins un module de batteries (1), **caractérisé en ce qu'**il comprend en outre un dispositif de désolidarisation (4) d'un module (1) d'un support (2) tel que défini dans une quelconque des revendications 1 à 6, ou dans lequel un dispositif de désolidarisation (4) d'un module (1) d'un support (2) tel que défini dans une quelconque des revendications 1 à 6 est installé au moment de désolidariser ledit au moins un module de batteries (1).

9. Procédé de désolidarisation d'un module (1) collé à l'aide d'un matériau de remplissage (3) sur un support (2) dans lequel :
- un fil (7, 16) est tendu à l'arrière dudit module (1), et
- ledit fil (7) est tiré vers l'avant dudit module (1) afin de couper ledit matériau de remplissage (3) reliant ledit module (1) audit support (2).

10. Procédé de désolidarisation d'un module (1) collé à l'aide d'un matériau de remplissage (3) sur un support (2) selon la revendication 9, dans lequel :
- ledit fil (7) est relié par une première extrémité (8) à un premier élément fixe (5) relié mécaniquement audit support (2) et agencé d'un côté d'une extrémité avant de la base dudit module (1),
- ledit fil (7) est relié de façon coulissante à un deuxième élément fixe (6) de manière à pouvoir coulisser au travers dudit deuxième élément fixe (6) qui est relié mécaniquement audit support (2) et agencé de l'autre côté de ladite extrémité avant de la base dudit module (1),
- la partie dudit fil (7) située entre ledit premier et ledit deuxième élément fixe (5, 6) est disposée autour d'au moins une partie de la base dudit module (1) au niveau de la couche dudit matériau de remplissage (3), et
- une traction (F) est exercée à la deuxième extrémité (9) dudit fil (7) de manière à faire coulisser le fil (7) au travers dudit deuxième élément fixe (6) et à faire glisser ledit fil (7) entre la base dudit module (1) et ledit support (2), ainsi
- ledit matériau de remplissage (3) est coupé et ledit module (1) est désolidarisé dudit support (2).

11. Procédé de désolidarisation d'un module (1) collé à l'aide d'un matériau de remplissage (3) à un support (3) selon la revendication 10, dans lequel ladite traction (F) est exercée sur ledit fil (7) dans une direction substantiellement perpendiculaire audit support (2) afin de faire coulisser ledit fil (7) substantielllement parrallèlement audit support (2) entre ledit premier et ledit deuxième élément fixe (5 ; 6).

12. Procédé de désolidarisation d'un module (1) collé à l'aide d'un matériau de remplissage (3) à un support (3) selon l'une des revendications 10 ou 11, dans lequel ladite traction (f) est exercée sur ledit fil (7) par des mouvements oscillant d'avant en arrière.

13. Procédé de désolidarisation d'un module (1) collé à l'aide d'un matériau de remplissage (3) à un support (2) selon l'une des revendications 10 à 12, dans lequel ledit fil (7), ledit premier élément fixe (5) et ledit deuxième élément fixe (6) sont assemblés sur ledit support (2) au moment de désolidariser ledit module (1) dudit support (2).

14. Procédé de désolidarisation d'un module (1) collé à l'aide d'un matériau de remplissage (3) à un support (2) selon l'une quelconque des revendications 9 à 13, dans lequel :
- ledit module (1) est un module de cellules de batteries, et
- ledit support (2) est un fond d'un boîtier d'un bloc de batteries pour véhicule électrique ou hybride.
